# EUROPÄISCHE PATENTSCHRIFT

(11) **EP 3 486 374 B1**
(45) Veröffentlichungstag und Bekanntmachung des Hinweises auf die Patenterteilung: **25.06.2025**
(21) Anmeldenummer: 18000845.0
(22) Anmeldetag: 30.10.2018
(51) Int. Cl.: E01F 13/12, A01G 9/02

(54) **ABSPERRSYSTEM FÜR ÖFFENTLICHE WEGE**
BARRIER SYSTEM FOR PUBLIC ROUTES
SYSTÈME DE BLOCAGE POUR VOIES PUBLIQUES

(30) Priorität: 17.11.2017 DE 202017005983 U
(43) Veröffentlichungstag der Anmeldung: 22.05.2019
(73) Patentinhaber: Fichtelmann, Martin, 14621 Schönwalde (DE)
(72) Erfinder: Fichtelmann, Martin, 14621 Schönwalde (DE)
(74) Vertreter: Kayser, Christoph

(56) Entgegenhaltungen:
- DE-U1- 202017 105 222
- DE-U1- 8 714 077
- GB-A- 2 536 867
- KR-B1- 100 678 376

## Beschreibung

Die vorliegende Erfindung betrifft ein Absperrsystem für öffentliche Wege mit wenigstens einem Standbehälter, der eine Bodenwand, vier Seitenwänden, einen Zwischenboden und einen Funktionsraum aufweist, wobei ein Zwischenraum zwischen der Bodenwand und dem Zwischenboden mit einer Flüssigkeit befüllt werden kann.

Ein Absperrsystem für öffentliche Bereiche ist derzeit von großem Interesse, um das Eindringen von Fahrzeugen in Bereiche zu verhindern, die von terroristischen Anschlägen stark bedroht sind. Zu diesem Zweck werden öffentliche Wege an strategischen Stellen abgesperrt. Eine solche Absperrung erfolgt mit Hilfe von Betonbauteilen, die entweder massiv ausgebildet sind oder neben der Funktion des Absperrens noch wenigstens eine weitere Funktion erfüllen. Solche funktionalen Absperrelemente sind z. B. Standbehälter, die als Pflanztröge ausgebildet sind. Alternativ könnten solche funktionalen Absperrelemente auch als Wasserbecken, Springbrunnen oder dergleichen ausgebildet sein.

Betonbauteile ohne Funktionalität sind unattraktiv und weisen bereits optisch auf einen Gefährdungsbereich hin. Menschen, die sich in solchen Bereichen aufhalten wollen, werden bereits dadurch verängstigt oder abgeschreckt. Aus diesem Grunde besteht ein Bedürfnis, ein Absperrsystem für öffentliche Wege mit Funktionalitäten derart weiter zu entwickeln, dass diese ihre Absperrfunktion erfüllen, ohne dass dies optisch zu erkennen ist.

Aus KR 100 678 376 B1 ist eine Leitplanke bekannt, die aus mehreren bepflanzten und aneinander gereihten Bauteilen bestehen kann, wobei die Bauteile jeweils als Pflanzkübel ausgebildet sind. Die Bepflanzung dient als angenehme Abgrenzung für Fußgänger und die Blätter der Bepflanzung können Luftverunreinigungen absorbieren.

Aus DE 87 14 077 U1 ist ein einzelner Pflanzkübel bekannt, der ohne Zwischenboden gegenüber von außen wirkenden Kräften instabil ausgebildet ist und nicht als Absperrsystem geeignet ist.

Die Aufgabe der vorliegenden Erfindung ist daher, ein Absperrsystem der eingangs genannten Art derart weiterzubilden, dass dieses auch an optisch sensiblen Bereichen des öffentlichen Raums in einfacher Weise eingesetzt werden kann, ohne dass durch dessen bloße Wahrnehmung bei den Verkehrsteilnehmern Ängste erzeugt werden.

Die Aufgabe der Erfindung wird dadurch gelöst, dass ein von den Seitenwänden und der Bodenwand des Standbehälters umschlossenes Volumen durch den Zwischenboden in den bodenseitigen Zwischenraum und einen oberen Funktionsraum unterteilt ist, wobei der Funktionsraum allseitig durch Seitenwandabschnitte der Seitenwände begrenzt ist und wobei der Zwischenraum an einer zweiten, dritten und vierten Seitenwand durch eine kleinteilige Fachwerkstruktur aus Vierkantstäben umschlossen ist, und an einer ersten Seitenwand eine Öffnung ausgebildet ist, die sich über im Wesentlichen die gesamte Weite des Zwischenraums an der Seitenwand erstreckt.

Durch die optimale Ausgestaltung des Funktionsraums, kann die eigentliche Funktion der bollwerkartigen Absperrung besser getarnt werden, als dies im Stand der Technik der Fall ist.

Bei der vorliegenden Erfindung handelt es sich um ein Absperrsystem in Modulbauweise. Der Grundbaustein besteht im Wesentlichen aus einem Gestell aus H/U Metall, Kunststoff und/oder Holz. Jederzeit kann dieser seiner Umgebung angepasst werden. Die Außenhülle des Grundbausteins kann im Wesentlichen aus Kunststoff, Holz, Alu, Metall und/oder Glas bestehen und individuell als Zusatzmodul angesteckt, verschraubt und/oder geklebt werden. Darüber hinaus kann die Außenhülle unter anderem auch mit Magnetschildern als Werbeträger genutzt werden.

In einer bevorzugten Variante der vorliegenden Erfindung sind wenigstens zwei modulare Grundbausteine über einer lösbare Seiltechnik verbunden.

Mit der vorliegenden Erfindung ist es möglich, ein relativ leichtes Absperrsystem, mit geringem Aufwand, an einen strategisch vorgesehenen Ort zu verbringen und erst dort die Masse zu erhöhen. Durch die modulare Bauweise kann das Gewicht durch die Hinzufügung von Masse von anfangs 500 kg bis auf 9.000 kg erhöht werden.

Die wenigstens eine Seitenwand mit einem sich über den Zwischenboden erstreckenden Seitenwandabschnitt begrenzt den Funktionsraum.

Mit diesem Funktionsraum lässt sich der wenigstens eine Standbehälter individuell gestalten. So könnte der Funktionsraum vorzugsweise als Pflanztrog genutzt werden. Denkbar ist aber auch eine Nutzung als Wasserbecken, Sitzbank Springbrunnen, Straßenleuchte, Fahrradständer, Fahnenmast oder dergleichen.

Ein weiterer Vorteil der vorliegenden Erfindung ist, dass der Funktionsraum vorzugsweise mit einem Substrat aus Schotter und Pflanzerde befüllt ist. Dadurch erhält der Standbehälter insgesamt eine größere Masse und lässt sich augenfällig gestalten.

Ein weiterer Vorteil der vorliegenden Erfindung ist, dass der Zwischenboden fluiddurchlässig ist. Dadurch wird sichergestellt, dass der Funktionsraum, wenn dies funktionsabhängig günstig ist, mit dem Zwischenraum kommunizieren kann und vorzugsweise Wurzeln einer Bepflanzung von unten mit Wasser versorgt.

Ein weiterer Vorteil der vorliegenden Erfindung ist, dass der der Funktionsraum eine Beregnungsanlage aufweisen kann. Dadurch können Pflanzen in dem als Pflanztrog gestalteten Funktionsraum auch von oben mit Wasser versorgt werden.

Ein weiterer Vorteil der vorliegenden Erfindung ist, dass der wenigstens eine Standbehälter eine erste Verbindungseinrichtung aufweist. Mit einer solchen ersten Verbindungseinrichtung kann ein Standbehälter mit einem anderen Objekt, z.B. einem zweiten Standbehälter, z.B. mit einem Seil oder einer starren Verbindung verbunden werden.

Ein weiterer Vorteil der vorliegenden Erfindung ist, dass wenigstens zwei Standbehälter über die erste Verbindungseinrichtung miteinander lösbar verbunden sind. Dadurch können zwei oder mehrere Standbehälter zu einer Einheit zusammengesetzt werden und ein "Bollwerk" gegen ein seitliches, heftiges Einwirken bilden, wie z.B. bei einem Aufprall eines Kraftfahrzeugs. Die Lösbarkeit der Verbindung lässt eine variable Anordnung und einen leichten Auf- und Abbau zu.

Ein weiterer Vorteil der vorliegenden Erfindung ist, dass zwischen den wenigstens zwei Standbehältern ein Funktionselement angeordnet ist. Ein solches Funktionselement kann z.B. eine Sitzbank sein, die eine mit der ersten Verbindungseinrichtung kompatible zweite Verbindungseinrichtung aufweist, wobei zwischen der ersten und der zweiten Verbindungseinrichtung eine lösbare Verbindung zwischen den wenigstens zwei Standbehältern und der Sitzbank herstellbar ist. Dadurch können zwischen wenigstens zwei Standbehältern andere Objekte eingefügt werden, die das "Bollwerk" optisch auflockern und dieses optisch leichter erscheinen lassen als es tatsächlich ist.

Ein weiterer Vorteil der vorliegenden Erfindung ist, dass der wenigstens eine Standbehälter auf der Basis eines Materials ausgewählt aus Metall, Kunststoff, Holz oder einer Kombination daraus hergestellt ist. Im Unterschied z.B. zu Beton, kann der Standbehälter aus Metall, Kunststoff und/oder Holz so gestaltet werden, dass dieser in der Wahrnehmung eines Betrachters als ein Standbehälter in Leichtbauweise erscheint, jedenfalls so leicht, dass dieser nicht als Prallbock wahrgenommen wird.

Ein Standbehälter aus Metall, Kunststoff und/oder Holz täuscht die Verkehrsteilnehmer und potentiellen Attentäter hinsichtlich seiner Masse und seiner Widerstandsfähigkeit gegenüber einem äußerlichen massiven Einwirken.

Ein weiterer Vorteil der vorliegenden Erfindung ist, dass der zweite Zwischenraum einen Füllstutzen aufweist. Durch den Füllstutzen ist der zweite Zwischenraum leicht mit einer Flüssigkeit, z.B. Wasser, zu befüllen.

Ein weiterer Vorteil der vorliegenden Erfindung ist, dass in dem Zwischenraum wenigstens ein Behälter zur Aufnahme der Flüssigkeit angeordnet ist. Mit dieser Maßnahme ist es möglich, den eigentlichen Aufnahmebehälter aus einem anderen Material herzustellen als die Wand des Zwischenraums. Zudem kann das Material des Behälters an die aufzunehmende Flüssigkeit angepasst werden. Auch die Anforderungen an die Dichtigkeit werden dadurch von dem Zwischenraum an sich auf den Behälter übertragen, was den Herstellungsprozess begünstigt.

Ein weiterer Vorteil der vorliegenden Erfindung ist, dass der wenigstens eine Behälter in dem Zwischenraum lösbar angebracht ist. Die lösbare Anordnung ermöglicht ein einfaches Auswechseln des jeweiligen Behälters. Das kann erforderlich sein, wenn ein Defekt am Behälter aufgetreten ist oder dieser gewartet oder gereinigt werden soll.

Ausführungsformen der vorliegenden Erfindung werden im Folgenden anhand der Zeichnung näher beschrieben. Es zeigen:
- Fig. 1: eine schematische Ansicht eines Rohbaus des Standbehälters des Absperrsystems gemäß vorliegender Erfindung ohne Zwischenboden in einer ersten Ausführungsform;
- Fig. 2: eine schematische Ansicht von einer ersten Seite des Standbehälters aus Fig. 1;
- Fig. 3: eine schematische Ansicht von einer zweiten Seite des Standbehälters aus Fig. 1;
- Fig. 4: eine schematische Schnittansicht entlang Linie A-A in Fig. 2;
- Fig. 5: eine schematische Ansicht von einer dritten Seite des Standbehälters aus Fig. 1 und Fig. 2, mit zwei Aufnahmebehältern;
- Fig. 6: eine schematische Schnittansicht entlang Linie A-A in Fig. 5 mit Kapillarhülsen zur Pflanzenbewässerung;
- Fig. 7: eine schematische Draufsicht auf einen Zwischenboden des Standbehälters;
- Fig. 8: eine schematische Ansicht eines Details B aus Fig. 5;
- Fig. 9: eine schematische Ansicht eines Details C einer Bodenwand aus Fig. 6;
- Fig. 10: eine schematische Ansicht eines Details D vom Zwischenboden aus Fig. 6;
- Fig. 11: eine schematische, perspektivische Ansicht des Standbehälters aus Fig. 1 mit Seitenwänden, von schräg oben;
- Fig. 12: eine schematische Ansicht einer Gruppe von untereinander verbundenen Standbehältern gemäß vorliegender Erfindung;
- Fig. 13: eine schematische Detailansicht einer Verbindung von zwei räumlich in Abstand angeordneter Standbehälter gemäß vorliegender Erfindung;

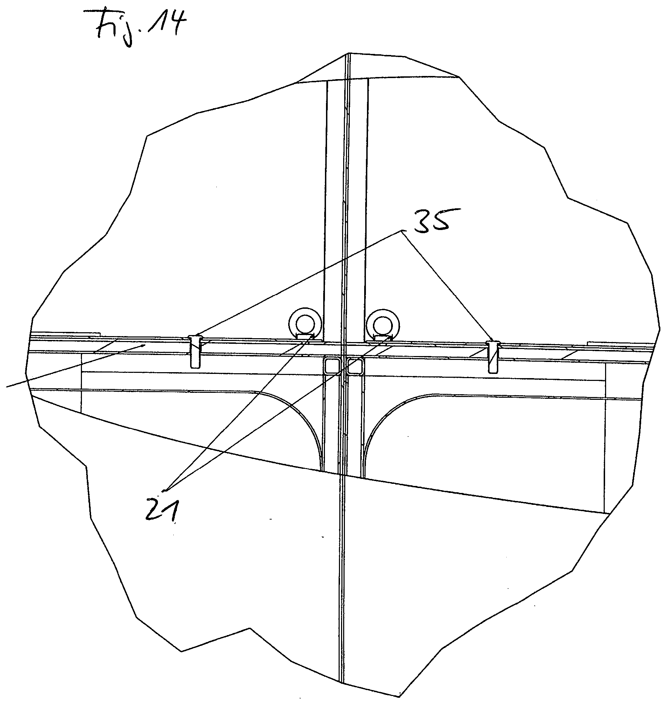

- Fig. 14: eine schematische Detailansicht einer Verbindung von zwei ohne Abstand direkt aneinandergefügter Standbehälter gemäß vorliegender Erfindung; und

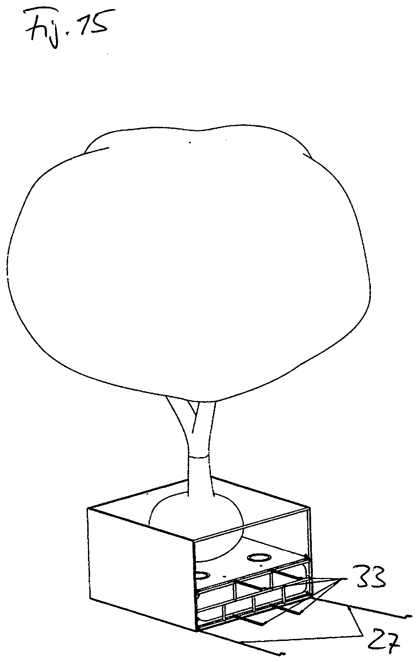

- Fig. 15: eine schematische Darstellung einer offenen Verbindungseite eines Standbehälters gemäß vorliegender Erfindung.
- Fig. 16: eine schematische Ansicht eines Rohbaus des Standbehälters des Absperrsystems ohne Zwischenboden in einer zweiten, nicht zur Erfindung gehörenden Ausführungsform;

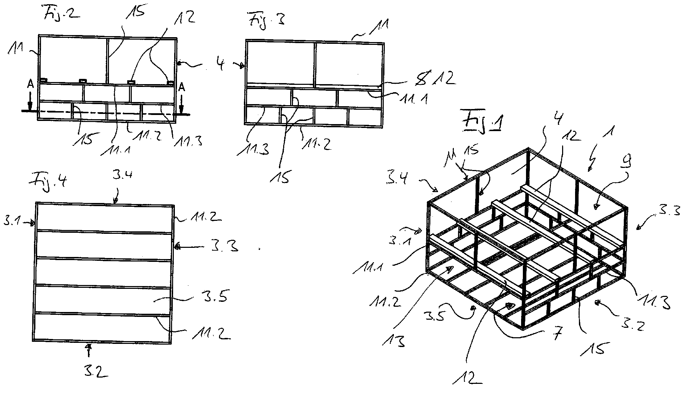

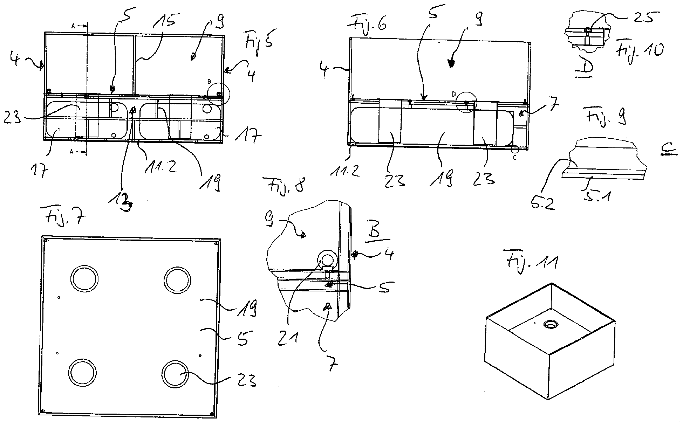

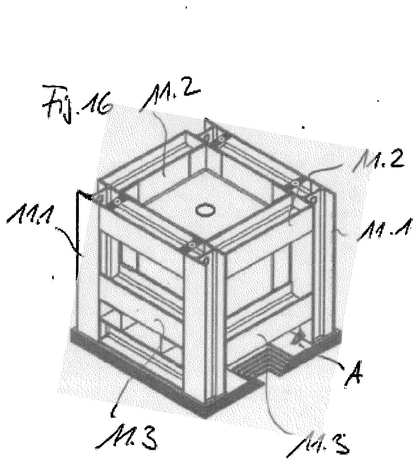

In Fig. 1 ein Standbehälter 1 im Rohbau perspektivisch in einer ersten Ausführungsform dargestellt. In Fig. 11 ist der gleiche Standbehälter 1 in seiner betriebsgerechten Ausbildung schematisch dargestellt. In Fig. 16 ist der Standbehälter 1 in einer zweiten Ausführungsform im Rohbau dargestellt. Der Standbehälter 1 kann in der Praxis als Singulär oder aber in Kombination mit wenigstens einem weiteren Standbehälter 1 ein Absperrsystem gemäß vorliegender Erfindung bilden.

Der Standbehälter 1 ist in der vorliegenden Ausführungsform rechteckig, quaderförmig und insbesondere würfelförmig ausgebildet und umfasst vier Seitenwände 3.1, 3.2, 3.3 und 3.4 sowie eine Bodenwand 3.5. Das von den Seitenwänden und der Bodenwand umschlossene Volumen ist durch einen Zwischenboden 5 (Fig. 11) in einen bodenseitigen, unteren Zwischenraum 7 und einen oberen Funktionsraum 9 unterteilt. Den Funktionsraum 9 begrenzen allseitig die zusammen als Seitenwandabschnitte 4 bezeichneten Bereiche der Seitenwände 3.1, 3.2, 3.3 und 3.4. Der Zwischenboden 5 ist in der dargestellten Ausführungsform parallel zu Bodenwand 3.5 (siehe auch Fig. 4) angeordnet. In der der dargestellten Ausführungsform hat der Zwischenraum 7 ein kleineres Volumen als der Funktionsraum 9, d.h., dieser hat eine geringere Bauhöhe als der Funktionsraum 9.

Der Standbehälter 1 wird in der ersten Ausführungsform durch eine Struktur aus Vierkantstäben 11 gebildet. An der ersten Seitenwand 3.1 ist bodenseitig eine Öffnung 13 ausgebildet, die sich über im Wesentlichen die gesamte Weite des Zwischenraums 7 an dieser Seitenwand 3.1 erstreckt. Der Zwischenraum 7 ist also von der ersten Seitenwand 3.1 aus frei zugänglich. Eine obere Begrenzung des Zwischenraums 7 wird durch vier Vierkantstäbe 11.1 erreicht. Auf diesen sind vier Rechteckrohre 12 in Abstand und parallel zueinander angeordnet. Diese bilden eine Auflage für den Zwischenboden 5.

Der bodenseitige Bereich der Struktur, als der den Zwischenraum 7 umschließende Bereich, ist an der zweiten, dritten und vierten Seitenwand 3.2, 3.3 und 3.4 durch eine kleinteilige "Fachwerkstruktur" definiert. In Fig. 2 und 3 ist zu sehen, dass zwischen bodenseitigen horizontalen Vierkantstäben 11.2 und den Vierkantstäben 11.1 an jeder Seite ein weiterer horizontaler Vierkantstab 11.3 eingesetzt ist und diese drei parallel verlaufenden Vierkantstäbe über kürzere vertikale Vierkantstäbe 15 miteinander verbunden sind. Die Verbindung erfolgt versetzt, wie bei auf Fuge gesetzten Mauersteinen. Durch diese Struktur erhält der untere, bodenseitige Bereich des Standbehälters 1 eine hohe Festigkeit.

In Fig. 5 ist der Standbehälter 1 von der ersten Seitenwand 3.1 aus zu sehen. In dem Zwischenraum 7 sind zwei baugleiche Aufnahmebehälter 17 für eine Flüssigkeit angeordnet. In der bevorzugten Ausführungsform ist die Flüssigkeit Wasser und sind die Aufnahmebehälter 17 Wassertanks. Natürlich können auch andere Flüssigkeiten eingesetzt werden. Jeder Wassertank kann ein Volumen von 6501 haben. Dieses Maß kann aber beliebig variieren und sowohl größer als auch kleiner sein. Zudem ist es möglich auch nur einen Aufnahmebehälter 17 von doppelter Größe oder mehr als zwei Aufnahmebehälter 17 von entsprechend geringerer Größe anzuordnen. In dem Funktionsraum 9 sind Aufnahmen für ein Seil 11 sowie optional Platz für einen Aufnahmebehälter 17 oder ein Zusatzgewicht (Masse) vorgesehen. In der einfachsten Ausführungsform kann auf einen Aufnahmebehälter 17 auch ganz verzichtet werden.

Der Aufnahmebehälter 17 ist über den Zwischenboden 5 mit einem Füllstutzen 19 verbunden, so dass über diesen Wasser bzw. Flüssigkeit nachgefüllt werden kann. Der Aufnahmebehälter 17 ist in dem Zwischenraum 7 lösbar angeordnet und kann aus diesem herausgezogen werden. Auf dem Zwischenboden 5 in Richtung Funktionsraum 9 sind Ringschrauben 21 zur Pflanzensicherung angeordnet. Dieses ist als Detail B in Fig. 8 genau dargestellt. Das Gesamtleergewicht des Standbehälters 1 beträgt in der dargestellten Ausführungsform etwa 2.000kg. Die Außenwände können aus Kunststoff, Holz, Metall, Sicherheitsglas oder anderen Materialien nach ästhetischen Gesichtspunkten gestaltet sein.

Fig. 6 ist ein Schnitt entlang Linie A-A in Fig. 5. Dadurch werden zwei Kapillarhülsen 23 zur Pflanzenbewässerung gut sichtbar. In der dargestellten Ausfiihrungsform sind vier solcher Kapillarhülsen 23 im Zwischenboden 5 angeordnet (Fig. 7). Durch diese können im Funktionsraum 9 gepflanzte Pflanzen mit ihrem Wurzelwerk Wasser aus dem Zwischenraum 7 bzw. dem wenigstens einen Aufnahmebehälter 17 aufnehmen.

Das in Fig. 6 angegebene Detail C ist in Fig. 9 näher dargestellt. Es zeigt, dass die Bodenwand 3.5 bodenseitig aus einer Kunststoffmatte 5.1 und oben, in Richtung Funktionsraum 9 aus einem Stahlblech 5.2 zusammengesetzt ist.

Das in Fig. 6 angegebene Detail D ist in Fig. 10 näher dargestellt. Es zeigt eine Befestigung oder Fixierung des wenigstens einen Aufnahmebehälters 17 an dem Zwischenboden 5 mittels wenigstens eines Sicherungsbolzens 25.

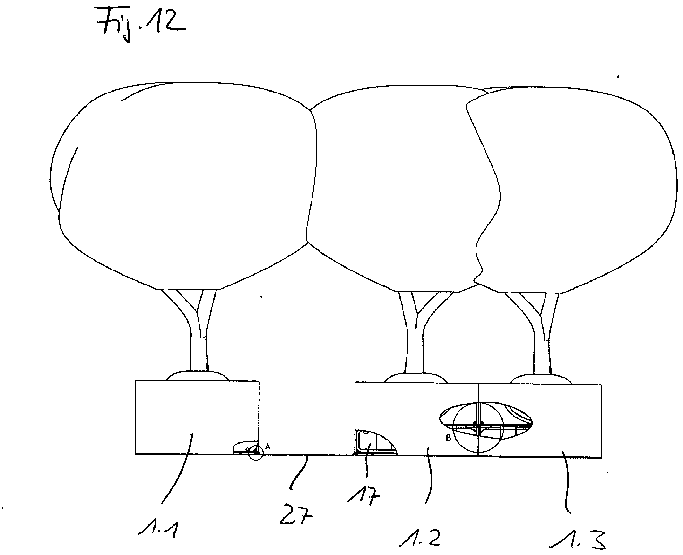

In Fig. 12 ist eine Gruppe von teilweise "aufgerissenen" Standbehältern 1.1, 1.2, 1.3 dargestellt. Mit einer Gruppe von Standbehältern 1.1, 1.2, 1.3 lässt sich ein größerer Bereich gegen das Eindringen von Fahrzeugen absichern. Solche Gruppen von Standbehältern 1.1, 1.2, 1.3 können einzeln in beliebiger Anordnung aufgestellt werden. Besonders vorteilhaft ist aber, wenn die Standbehälter 1.1, 1.2, 1.3 untereinander verbunden sind. In Fig. 8 sind zwei unterschiedliche Verbindungsformen dargestellt. Der linke Standbehälter 1.1 ist in einem Abstand A zu dem mittleren Standbehälter 1.2 angeordnet. In dem linken Standbehälter 1.1 und in dem mittleren Standbehälter 1.2 in Fig. 8 ist jeweils ein Ende 27.1 eines Stahlseils 27 verankert.

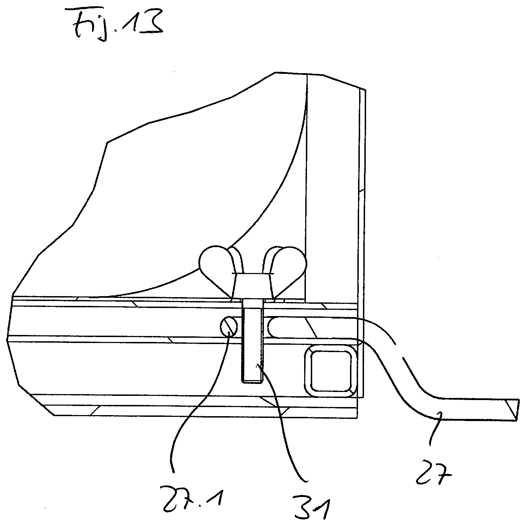

In Fig. 13 ist die Verbindungstechnik im linken Standbehälter 1.1 der Fig. 12 im Detail dargestellt. Das Stahlseil 27 ist mit dem ersten Stahlseilende 27.1, das ringförmig ausgebildet ist oder einen Ring aufweist, durch die Öffnung 12 der zweiten Seitenwand 3.1 in den linken Standbehälter 1.1 eingeführt und dort fixiert. Die Fixierung erfolgt in der vorliegenden Ausführungsform mithilfe von zwei Fixierplatten, welche über die Seilaufnahmen montiert werden. In anderen Ausführungsformen kann die Fixierung oder Befestigung des Stahlseils 27 in einem Standbehälter 1.1 auch anders ausgeführt sein. Die Befestigungstechnik kennt viele sichere Befestigungen, die auch hier zum Einsatz kommen können. Die für das erste Stahlseilende 27.1 beschriebene Befestigung im linken Standbehälter 1.1 erfolgt in gleicher Weise auch für ein zweites Stahlseilende 27.2 an der dritten Seitenwand 3.3, also in Fig. 12 an der gegenüberliegenden Seitenwand des in Abstand A angeordneten mitt-leren Standbehälters 1.2. Vorzugsweise ist der Abstand A zwischen dem linken Standbehälter 1.1 und dem mittleren Standbehälter 1.2 so gewählt, dass das Stahlseil 27 gespannt ist bzw. so straff am Boden entlanggeführt ist, dass es am Boden geradlinig aufliegt.

In Fig. 12 ist auch dargestellt, dass der mittlere Standbehälter 1.2 in direktem Kontakt mit dem rechten Standbehälter 1.3 angeordnet ist. Der Verbindungsbereich ist in Fig. 8 im Detail dargestellt.

Jeder Standbehälter 1.1, 1.2, 1.3 weist, wenn er mit einem weiteren Standbehälter verbunden ist, wenigstens eine Brücke 28 auf. Diese Brücke 28 deckt das jeweilige Stahlseil 27 ab und unterbindet damit eine Stolpergefahr. In der dargestellten Ausführungsform hat der Standbehälter 1.1 eine Brücke 28 und ein Stahlseil 27. Die Brücken 28 sind an dem jeweiligen Standbehälter 1.1, 1.2, 1.3 befestigt, z.B. angeschweißt oder alternativ durch Sicherungsbolzen 35 lösbar gesichert. Die Sicherungsbolzen 25 arretieren die jeweiligen Brücken 28 an den Seitenwänden 3.1 und/oder 3.3 des Standbehälters 1.1, 1.2, 1.3. Auf diese Weise sind der mittlere Standbehälter 1.2 und der rechte Standbehälter 1.3 in Fig. 12 untrennbar miteinander verbunden.

In einer vorteilhaften Ausführungsform, wie sie in Fig. 12 angedeutet ist, wird das wenigstens eine Stahlseil 27 von dem linken Standbehälter 1.1 zu dem mittleren Standbehälter 1.2 geführt. Die Seilaufnahmen sind so konzipiert, dass vom mittleren Standbehälter 1.2 bis in den dritten, rechten Standbehälter 1.3 ein weiteres Seil 27 geführt werden kann. In Fig. 10 sind also nicht nur der mittlere Standbehälter 1.2 und der rechte Standbehälter 1.3 durch das Seil 27 miteinander verbunden, sondern es besteht auch eine Verbindung zwischen dem linken Standbehälter 1.1 und dem rechten Standbehälter 1.3 über beide Seile 27. Auf diese Weise erfolgt die Verbindung des mittleren Standbehälters 1.2 mit dem rechten Standbehälter 1.3 über das zweite Seil 27 und durch eine weitere Verbindung mit dem linken Standbehälter 1.1 über das erste Seil 27. Die dadurch entstandene Kette ist in der Lage massive Krafteinwirkung aufzufangen. Die beiden Seile 27 sind vorzugsweise Stahlseile.

In Fig. 16 ist eine zweite Ausführungsform des Standbehälters 1 dargestellt, wobei die Verbindungstechnik mittels Seile wie in der ersten Ausführungsform erfolgt. In der zweiten Ausführungsform wird der Standbehälter 1 durch eine Struktur aus massiv verschweißten Doppel-T-Trägern gebildet. Eine obere Begrenzung des Zwischenraums 6 wird durch obere Doppel-T-Träger 11.2 erreicht. Innerhalb dieser oberen Doppel-T-Träger 11.2 befinden sich zwei Aufnahmen A für Transportzinken von Gabelstaplern oder Radladern.

Der bodenseitige Bereich der Struktur, also der den Zwischenraum 6 umschließende Bereich, ist an der zweiten und vierten Seitenwand 3.2 und 3.4 durch einen weiteren Doppel-T-Träger 11.3 begrenzt. In Fig. 16 ist zu sehen, dass auf der Bodenplatte 3.5 jeweils an den Ecken vier Doppel-T-Träger 11.1 vertikal verschweißt sind. Am oberen Ende der vier Doppel-T-Träger 11.1 sind diese jeweils mit einem weiteren Doppel-T-Träger 11.2 verbunden. An der Seitenwand 3.2 und 3.4 sind diese vertikalen Doppel-T-Träger 11.1 jeweils oberhalb der Aufnahme A für einen Transportzinken mit einem weiteren Doppel-T-Träger 11.3 massiv verschweißt.

### Bezugszeichenliste

- 1: Standbehälter
- 1.1: erster Standbehälter
- 1.2: zweiter Standbehälter
- 1.3: dritter Standbehälter
- 3.1: erste Seitenwand
- 3.2: zweite Seitenwand
- 3.3: dritte Seitenwand
- 3.4: vierte Seitenwand
- 3.5: Bodenwand
- 4: Seitenwandabschnitt
- 5: Zwischenboden
- 5.1: Kunststoffmatte
- 5.2: Strahlblech
- 7: Zwischenraum
- 9: Funktionsraum
- 11: Vierkantstäbe/Doppel-T-Träger
- 11.1: erste Vierkantstäbe/Doppel-T-Träger
- 11.2: bodenseitiger, horizontaler Vierkantstab/Doppel-T-Träger
- 11.3: weiterer horizontaler Vierkantstab/Doppel-T-Träger
- 12: Rechteckrohre
- 13: Öffnung
- 15: vertikale Vierkantstäbe/Doppel-T-Träger
- 17: Aufnahmebehälter
- 19: Füllstutzen
- 21: Ringschrauben
- 23: Kapillarhülsen
- 25: Sicherungsbolzen
- 27: Stahlseil
- 27.1: erstes Stahlseilende
- 27.2: zweites Stahlseilende
- 28: Brücke
- 29: Öffnung
- 31: Flügelschraube
- 33: Verbindungsleiste
- 35: Sicherungsbolzen

## Patentansprüche

1. Absperrsystem für öffentliche Wege mit wenigstens einem Standbehälter (1), der eine Bodenwand (3.5), vier Seitenwände (3.1, 3.2, 3.3, 3.4), einen Zwischenboden (5) und einen Funktionsraum (9) aufweist, wobei ein Zwischenraum (7) zwischen der Bodenwand (3.5) und dem Zwischenboden (5) mit einer Flüssigkeit befüllt werden kann,
**dadurch gekennzeichnet,**
**dass** ein von den Seitenwänden (3.1, 3.2, 3.3, 3.4) und der Bodenwand (3.5) des Standbehälters (3.5) umschlossenes Volumen durch den Zwischenboden (5) in den bodenseitigen Zwischenraum (7) und einen oberen Funktionsraum (9) unterteilt ist, wobei der Funktionsraum (9) allseitig durch Seitenwandabschnitte (4) der Seitenwände (3.1, 3.2, 3.3, 3.4) begrenzt ist und wobei der Zwischenraum (7) an einer zweiten, dritten und vierten Seitenwand (3.2; 3.3; 3.4) durch eine kleinteilige Fachwerkstruktur aus Vierkantstäben (11.1; 11.2; 11.3) umschlossen ist, und an einer ersten Seitenwand eine Öffnung ausgebildet ist, die sich über im Wesentlichen die gesamte Weite des Zwischenraums an der Seitenwand erstreckt.

2. Absperrsystem nach Anspruch 1
**dadurch gekennzeichnet,**
**dass** der wenigstens eine Standbehälter (1) eine erste Verbindungseinrichtung zur Verbindung mit wenigstens einem zweiten Standbehälter (1.1, 1.2, 1.3) aufweist.

3. Absperrsystem nach Anspruch 2,
wobei
ein Stahlseil (27) zwischen dem einen Standbehälter (1) und dem wenigstens einen zweiten Standbehälter (1.1; 1.2; 1.3) angeordnet ist.

4. Absperrsystem nach Anspruch 2 oder 3,
**dadurch gekennzeichnet,**
**dass** der eine Standbehälter (1) und der wenigstens eine zweite Standbehälter (1.1; 1.2; 1.3) lösbar verbunden sind.

5. Absperrsystem nach einem der Ansprüche 1 bis 5,
**dadurch gekennzeichnet, dass** der Funktionsraum (9) mit einem Substrat aus Schotter und Pflanzerde befüllt ist.

6. Absperrsystem nach einem der Ansprüche 1 oder 5,
**dadurch gekennzeichnet,**
**dass** der Zwischenboden (5) fluiddurchlässig ist.

7. Absperrsystem nach einem der Ansprüche 1 bis 6,
**dadurch gekennzeichnet,**
**dass** der der Funktionsraum (9) eine Beregnungsanlage aufweist.

8. Absperrsystem nach einem der Ansprüche 2 bis 7,
**dadurch gekennzeichnet,**
**dass** zwischen den wenigstens zwei Standbehältern (1) ein Funktionselement lösbar angeordnet ist.

9. Absperrsystem nach einem der vorstehenden Ansprüche,
**dadurch gekennzeichnet,**
**dass** der Funktionsraum (9) ein Volumen von wenigstens 3501 aufweist.

10. Absperrsystem nach einem der vorstehenden Ansprüche,
**dadurch gekennzeichnet,**
**dass** in dem Zwischenraum (7) wenigstens ein Aufnahmebehälter (17) zur Aufnahme der Flüssigkeit angeordnet ist.

11. Absperrsystem nach Anspruch 10,
**dadurch gekennzeichnet,**
**dass** der wenigstens eine Aufnahmebehälter (17) in dem Zwischenraum (7) lösbar angebracht ist.

12. Absperrsystem nach einem der vorstehenden Ansprüche,
**dadurch gekennzeichnet,**
**dass** in dem Zwischenboden (5) wenigstens eine Kapillarhülse (23) angeordnet ist.

## Claims

1. A barrier system for public roads comprising at least one standing container (1), which comprises a floor wall (3.5), four side walls (3.1, 3.2, 3.3, 3.4), an intermediate floor (5) and a functional space (9), wherein an intermediate space (7) between the floor wall (3.5) and the intermediate floor (5) may be covered with a liquid, **characterized in that** a volume enclosed by the side walls (3.1,3.2,3.3,3.4) and the floor wall (3.5) of the standing container (3.5) is divided by the intermediate floor (5) into the intermediate space (7) on the floor side and an upper functional space (9), wherein the functional space (9) is delimited on all sides by side wall sections (4) of the side walls (3.1, 3.2, 3.3, 3.4) and wherein the intermediate space (7) on a second, third and fourth side wall (3.2; 3.3; 3.4) is separated by a small-scale truss structure made consisting of square rods (11.1; 11.2; 11.3), and an opening is formed on a first side wall which extends over essentially the entire width of the intermediate space between the side walls.

2. The barrier system according to Claim 1, **characterized in that** the at least one standing container (1) comprises a first connection device for connecting to at least one second standing container (1.1, 1.2, 1.3).

3. The barrier system according to Claim 2, wherein a steel cable (27) is arranged between the one standing container (1) and the at least one second standing container (1.1; 1.2; 1.3).

4. The barrier system according to Claim 2 or 3, **characterized in that** the one standing container (1) and the at least one second standing container (1.1; 1.2; 1.3) are connected in a detachable manner.

5. The barrier system according to any one of the Claims 1 to 5, **characterized in that** the functional space (9) is filled with a substrate composed of gravel and potting soil.

6. The barrier system according to any one of the Claims 1 or 5, **characterized in that** the intermediate floor (5) is fluid-permeable.

7. The barrier system according to any one of the Claims 1 to 6, **characterized in that** the functional space (9) comprises an irrigation system.

8. The barrier system according to any one of the Claims 2 to 7, **characterized in that** a functional element is arranged in a detachable manner between the at least two standing containers (1).

9. The barrier system according to any one of the preceding claims, **characterized in that** the functional space (9) comprises a volume of at least 350 1.

10. The barrier system according to any one of the preceding claims, **characterized in that** at least one holding container (17) for holding the liquid is arranged in the intermediate space (7).

11. The barrier system according to Claim 10, **characterized in that** the at least one receptacle (17) is attached in the intermediate space (7) in a detachable manner.

12. The barrier system according to any one of the preceding claims, **characterized in that** at least one capillary sleeve (23) is arranged in the intermediate floor (5).

## Revendications

1. Système de barrière destiné à des voies publiques, pourvu d'au moins un conteneur autoportant (1), qui comporte une paroi de fond (3.5), quatre parois latérales (3.1, 3.2, 3.3, 3.4), un fond intermédiaire (5) et un espace fonctionnel (9), un espace intermédiaire (7) entre la paroi de fond (3.5) et le fond intermédiaire (5) pouvant être rempli d'un liquide, **caractérisé en ce qu'**un volume entouré par les parois latérales (3.1, 3.2, 3.3, 3.4) et la paroi de fond (3.5) du conteneur autoportant (3.5) est divisé dans le fond intermédiaire (5), dans l'espace intermédiaire (7) côté fond et dans un espace fonctionnel (9) supérieur, l'espace fonctionnel (9) étant délimité de toutes parts par des segments (4) de paroi latérale des parois latérales (3.1, 3.2, 3.3, 3.4) et l'espace intermédiaire (7) étant entouré sur une deuxième, troisième et quatrième paroi latérale (3.2 ; 3.3 ; 3.4) par une structure en treillis à petite échelle, constituée de barres carrées (11.1 ; 11.2 ; 11.3) et sur une première paroi latérale étant conçu un orifice qui s'étend sur sensiblement l'ensemble de l'ampleur de l'espace intermédiaire sur la paroi latérale.

2. Système de barrière selon la revendication 1, **caractérisé en ce que** l'au moins un conteneur autoportant (1) comporte un premier dispositif d'assemblage, pour l'assemblage avec au moins un deuxième conteneur autoportant (1.1, 1.2, 1.3).

3. Système de barrière selon la revendication 2, un câble d'acier (27) étant placé entre ledit un conteneur autoportant (1) et l'au moins un deuxième conteneur autoportant (1.1; 1.2; 1.3).

4. Système de barrière selon la revendication 2 ou 3, **caractérisé en ce que** ledit un conteneur autoportant (1) et l'au moins un deuxième conteneur autoportant (1.1 ; 1.2 ; 1.3) sont assemblés de manière amovible.

5. Système de barrière selon l'une quelconque des revendications 1 à 5, **caractérisé en ce que** l'espace fonctionnel (9) est rempli d'un substrat constitué de ballast et de terre végétale.

6. Système de barrière selon l'une quelconque des revendications 1 ou 5, **caractérisé en ce que** le fond intermédiaire (5) est perméable aux fluides.

7. Système de barrière selon l'une quelconque des revendications 1 à 6, **caractérisé en ce que** l'espace fonctionnel (9) comporte une installation d'arrosage.

8. Système de barrière selon l'une quelconque des revendications 2 à 7, **caractérisé en ce qu'**entre les au moins deux conteneurs autoportants (1), un élément fonctionnel est placé de manière amovible.

9. Système de barrière selon l'une quelconque des revendications précédentes, **caractérisé en ce que** l'espace fonctionnel (9) présente un volume d'au moins 350 1.

10. Système de barrière selon l'une quelconque des revendications précédentes, **caractérisé en ce que** dans l'espace intermédiaire (7) est placé au moins un conteneur récepteur (17), destiné à recevoir le liquide.

11. Système de barrière selon la revendication 10, **caractérisé en ce que** l'au moins un conteneur récepteur (17) est placé de manière amovible dans l'espace intermédiaire (7).

12. Système de barrière selon l'une quelconque des revendications précédentes, **caractérisé en ce que** dans le fond intermédiaire (5) est placée au moins une douille capillaire (23).
